# EUROPEAN PATENT SPECIFICATION

(11) **EP 1 933 678 B1**
(45) Date of publication and mention of the grant of the patent: **06.05.2009**
(21) Application number: 06704535.1
(22) Date of filing: 08.02.2006
(51) Int. Cl.: A47J 37/04

(54) **ENCLOSED ROTISSERIE**
EINGESCHLOSSENER GRILL
ROTISSERIE FERMEE

(30) Priority: 18.02.2005 GR 20050100080
(43) Date of publication of application: 25.06.2008
(73) Proprietor: Visvardis S.A., Patras (GR)
(72) Inventor: VISVARDIS, Spiridon, D., 26 222 Patras (GR)
(86) International application number: PCT/GR2006/000005
(87) International publication number: WO 2006/087591

(56) References cited:
- FR-A- 2 658 062
- US-A- 4 459 902
- US-A- 4 825 845

## Description

The present invention relates to an enclosed rotisserie, which operates with gas, electricity or coal, suitable for roasting meat by moving it or rotating it on spits or racks on a drum as well as in other ways.

Said rotisserie consists of a metal frame, heat-resisting glasses, rollers, a rotation mechanism, a gas burner, electric resistances, automatic gas devices and automatic electric devices. Rotisseries of this type are known for the enclosure of the side openings with heat-resisting glasses allowing the placement or the removal of the meat. Said glasses open in three different ways.

Firstly, sliding successive glasses move horizontally and parallel on guides within each side opening (this is not a preferred embodiment because the opening obtained is smaller than the total surface on each side of the rotisserie, hindering the appropriate movement of the meat through the rotisserie).

Secondly, a one-piece sliding glass slides vertically on two guides in an upward direction supported by cables equipped with counterweights to counterbalance the weight of said rotisserie, (this is not a preferred embodiment because the opening exceeds the rotisserie's total height and the counterweights cause the rotisserie to become excessively heavy).

Thirdly, the glasses rotating outwardly, (this embodiment is hazardous when opening due to the risk of glass breaking and being there also the risk of bums for the user, while obstructing the approach around the rotisserie). FR 2 658 062 illustrates this type of rotissene.

Rotisseries of this type are used only for roasting meat using exclusively gas or exclusive electricity or exclusively coals, this being a disadvantage since there is no flexibility in use, owing to the fact that each of these methods has both advantages and disadvantages. A specific advantage of the present invention is that when the glasses open, the entire surface of each side of the rotisserie also opens, facilitating the insertion or removal of meat to be cooked. The glasses, when open, do not exceed the outer limits of the rotisserie, neither circumferentially nor upwardly and there is no extra weight since no counter weights are used.
Another advantage of the present invention is that the combustible that may be used for cooking is either gas, or coal or both.

The enclosed rotisserie, according to the present invention may be characterized by the fact that the glasses covering the opening on each side consist of two pieces, mounted with rollers on two vertical side guides running along the entire height of the rotisserie. To release the opening, the glasses are left to slide each one going to the opposing direction, one sliding upwards the upper part of the rotisserie, and the other sliding downwards. By two cables mounted on a pulley, which is mounted on the upper part of the rotisserie the balance of weight is achieved for both glasses. Pushing downwards or upward one of the glasses, they both move at the same time, either approaching or sliding off from each other.

Another characteristic of the present invention is also the burning agent, the shape of which is either hollow or multi-angular, it has holes at the lower part used as an air inlet, and the gas burner is placed within it. The advantages of this invention is that the heat is emitted inside the rotisserie, due to the hollow part with an upward-side direction where the meat rotates, thus reducing the heat going towards the lower part where fat-collectors are placed, while it is an easy way of placing and removing the burning agent from the rotisserie's tray.

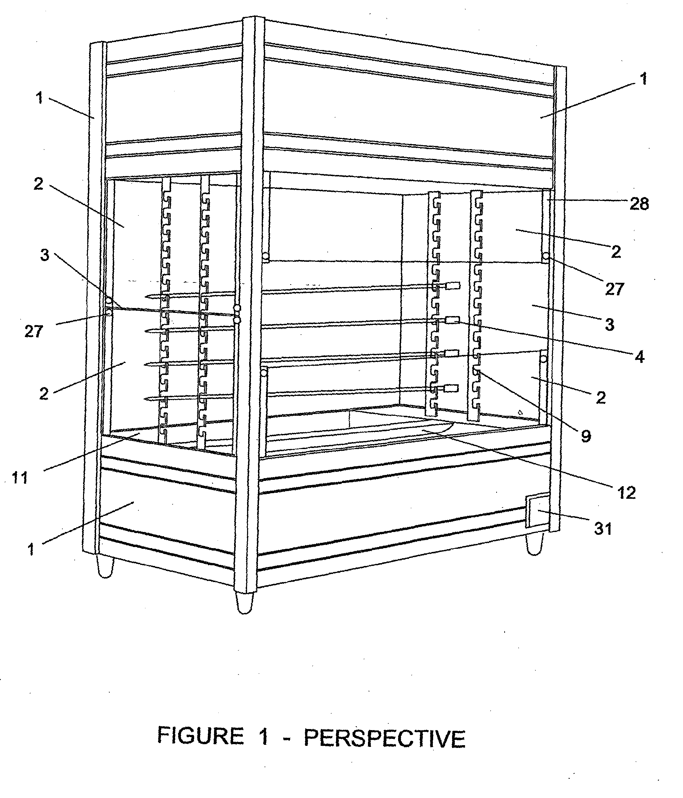

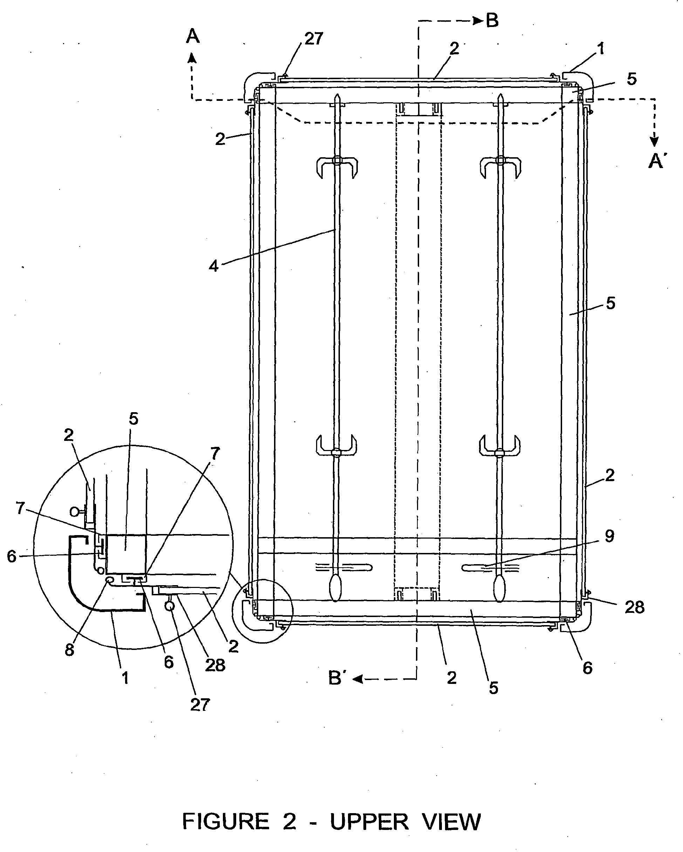

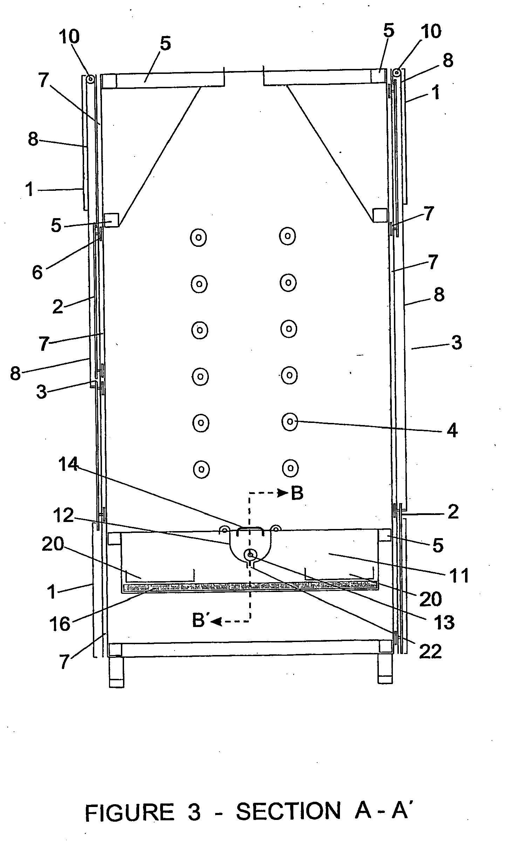

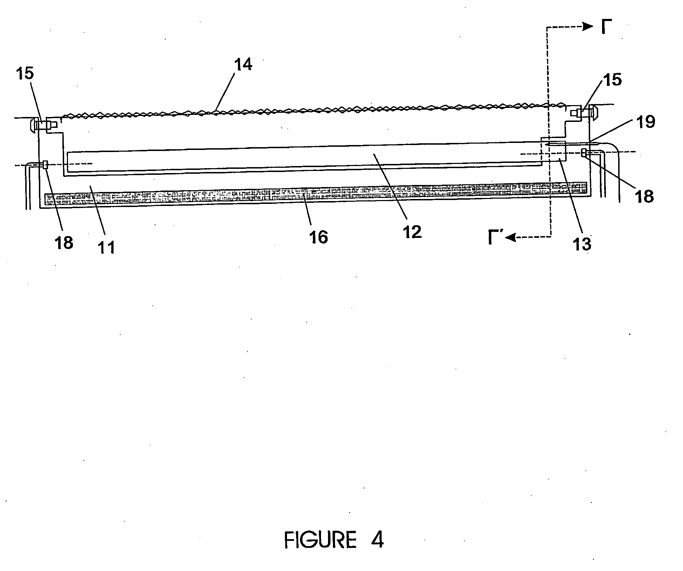

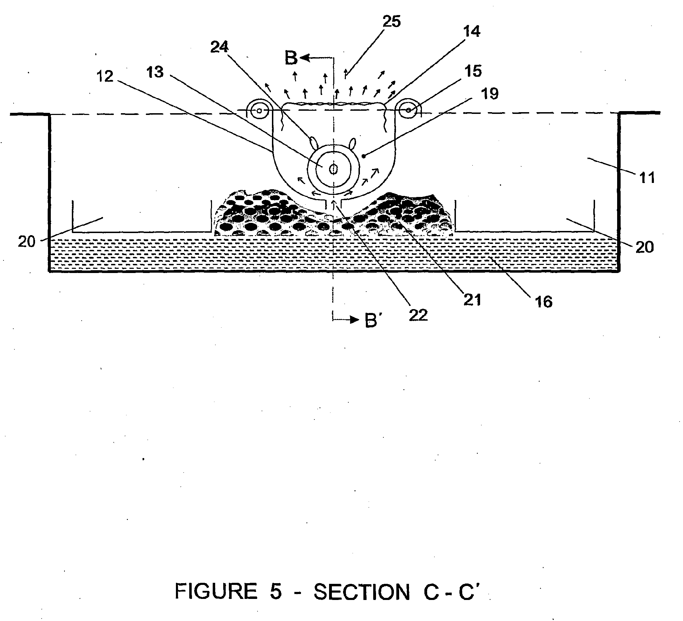

Figure 1 shows a perspective view one of the rotisserie models, Figure 2 shows a sectional view, Figure 3 shows the A-A section, Figure 4 shows the rotisserie's tray in section B-B, Figure 5 shows the rotisserie's tray in section C-C.

The present invention refers to the accompanying figures of which: figure 1 shows a perspective view of one of the embodiments of the present invention. With the metal shell (1), the glasses (2), the side openings (3), the spits (4), the handle (27), the metal support of the glass (26), the burning agent carrier (12), the gas or electricity control devices (17).

Figure 2 two shows the top view of the embodiment with the metal frame (5), the metal shell (1), the glasses (2), the rollers (6), the guides (7), the cable (8), the spits (4), the rotation mechanisms (9), the handle (27) and the metal support of the glass (26), the burning agent (12) and shows the points of sections A-A and B-B.

Figure 3 shows the section A-A of the rotisserie with the metal frame (5), the metal shelter (1), the glasses (2), the side openings (3), the rollers (6), the guides (7), the pulley (10), the cable (8), the spits (4), the rotisserie's tray (11), the burning agent (12), the gas burner (13), the sieve (14) that covers the burner (13), the supports of the burning agent (15), the fire-proof material (16), air inlet holes (22) and shows the points of sections B-B of the tray.

Figure 4 shows section B-B which indicates the tray (11), the fire-proof material (16), the burning agent (12), the gas burner (13), the sieve (14) that covers the burner (13), the supports of the burning agent (15), the gas injection nozzles (18), the thermomagnetic safety valve (19) and shows the point for section C-C.

Figure 5 shows section C-C that depicts the rotisserie's tray (11), the fire-proof material (16), the fat-collectors (20), the place intended for coals (21), the burning agent (12), the gas burner (13), the sieve (14) that covers the burner (13), the thermomagnetic safety valve (19), the bearer's supports (15), the air inlet hole (22), the arrows shows the direction of air inlet (23), the flame of the gas burner (24), the arrows showing the direction of heat (25) and depicts the point for section B-B.

The operation mode of the enclosed rotisserie, according to the present invention, is the following:
To release each side opening (3) push the handle (27) when it is mounted on the lower glass (2) with a downward direction, then both glasses (2) simultaneously move away from each other, thus opening the entire surface of the side opening (3). To close it, reverse the push on the handle (27) upwards and this being achieved because both glasses (2) have the same weight and balance on two cables (8) on the right and left, each cable is passed on a pulley (10), which is fixed on the metal frame (5) on the upper part of the rotisserie. The same movement may be done when the handle (27) is mounted on the upper glass (2).

The heat required for cooking meat may be produced either by gas burning or coal burning, natural or artificial, or by electricity. By switching on the gas burner (13) the flame (24) creates heat emitted upwardly (25) and to the sides towards the meat roasting within the rotisserie.

Alternatively, the burning agent (12) can be removed from the tray (11) and initially use natural coal (21), then, when the heat of the natural coal is reduced, the agent (12) may be placed on the supports (15) and by switching on the gas burner (13) to continue the cooking of meat. It should be noted that electrical resistances might be used instead of the gas burner.

## Claims

1. The enclosed rotisserie consists of a metal frame (5), a metal shell (1), heat resisting glasses (2), cables (8), rollers (6), guides (7), a gas burner (13) or electric resistances (13), a burning agent (12), a rotation mechanism (9), spits (4), automatic gas and electrical devices (17), **characterized by** the fact that for the closing of each side opening (3) there is a system according to which the glasses (2) are two pieces having equal dimensions and weight, and balance with each other through two cables (8), move in a parallel direction and on guides (7), get closer and cover the whole surface of the side opening (3) or moving apart releasing the whole side surface (3), and by a burning agent (12), the shape of which is hollow or multi-angular, with air inlet holes (22) at the lower part, and easy to place or remove from the tray of the rotisserie (11).

2. The enclosed rotisserie, according to claim 1, is **characterized in that** there are two glasses (2) used to cover each side opening, having the same dimensions and weight and counterbalance each other on two side cables (8), passing through a corresponding pulley (10) which is permanently mounted on a frame (5) on the upper part of the rotisserie.

3. The enclosed rotisserie according to claims 1 and 2 is **characterized in that** both glasses (2) used in covering each side opening (3) slide through rollers (6) on two guides (7) fixed on the edges of the frame (5) from the lower part to the upper part of the rotisserie.

4. The enclosed rotisserie according to claims 1, 2 and 3 is **characterized in that** in closing the glasses (2) covering each side opening (3) of the rotisserie, push the handle (27) of one of the glasses (2) towards the lower or the upper part accordingly and the glasses (2) move away at the same time, one towards the upper part of the rotisserie and the other towards the lower part of the rotisserie, releasing the whole side opening (3)
To close the side opening, reverse the push on the handle (27) and the glasses will move at the same time, coming closer and covering the corresponding side opening.

5. The enclosed rotisserie, according to claims 1, 2, 3 and 4 is **characterized in that** the rotisseries of the enclosed type operate according to the method described in claims 1-2-3 and 4.

6. The enclosed rotisserie, according to claim 1 is **characterized in that** the shape of the burning agent (12) is parallel, the length is the same as the length of the tray (11) of the rotisserie, it forms a hollow part within which the gas burner is placed (13) and the upper sieve (14) and on the lower part of the hollow the are holes (22) for the air inlet (23). On both edges, there is clutch suitably adjusted to the supports (15).

7. The enclosed rotisserie according to claims 1 to 6 is **characterized in that** the flame (24) of the gas burner (13) emits heat with upward-side direction (25) where the meat rotates inside the rotisserie this being obtained through the hollow of the burning agent (12), by reducing at the same time, the heat at the lower part of the tray (11) where the fat collectors (20) are located.

8. The enclosed rotisserie according to claims 1-6 and 7 is **characterized in that** the burning agent (12) is easily placed or removed by the supports (15). This way allowing to successfully use the gas burner (13) either when the burning agent (12) is removed or using coal (21).

## Patentansprüche

1. Der einliegende Grill besteht aus einem Metallrahmen (5), einem Metallgehäuse (1), hitzebeständige Glasscheiben (2), Kabeln (8), Gleitrollen (6), Führungsschienen (7), einem Gasbrenner (13) oder einem elektrischen Widerstand (13), einer Brenndüse (12), einem Rotierungsmechanismus (9), Bratspieße (4), automatischen Gas- u. Elektrogeräten (17), und wird **dadurch gekennzeichnet, daß** es zur Schließung jeder Seitenöffnung (3) ein System besteht, wonach die Glasscheiben (2) zwei Teile von gleicher Größe und Gewicht sind, sich durch zwei Kabeln (8) ausbalancieren, sich in paralleler Richtung und auf Führungsschienen (7) bewegen, sich nähern und die ganze Fläche der Seitenöffnung (3) zudecken oder sich auseinander bewegen und die ganze Seitenfläche aufdecken (3), und auch **dadurch**, dass der Grill eine Brenndüse in hohler oder vieleckiger Form besitzt, mit Luftzuführungsöffnungen (22) im Unterteil; sie ist vom Ablagetablett (11) des Grills leicht zu entfernen.

2. Gemäß Anspruch 1 ist der einliegende Grill **dadurch gekennzeichnet, daß** er zur Zudeckung jeder Seitenöffnung zwei Glasscheiben (2) besitzt, welche von gleicher Größe und Gewicht sind und sich durch zwei Seitenkabeln (8) ausbalancieren; die Kabeln laufen durch eine entsprechende Seilrolle (10), welche an einem Rahmen (5) im oberen Teil des Grills permanent befestigt ist.

3. Gemäß der Ansprüche 1 und 2 ist der einliegende Grill **dadurch gekennzeichnet, dass** beide Glasscheiben (2) zur Zudeckung jeder Seitenöffnung (3) durch Rollen (6) auf zwei Führungsschienen (7) gleiten, welche an den Rändern des Rahmes (5) vom unteren zum oberen Teil des Grills befestigt sind.

4. Gemäß der Ansprüche 1, 2 und 3 ist der einliegende Grill **dadurch gekennzeichnet, dass** bei der Schließung der Glasscheiben (2), die zur Zudeckung jeder Seitenöffnung (3) des Grills dienen, durch Druck auf dem Griff (27) entsprechend nach dem unteren oder dem oberen Teil sich die Glasscheiben (2) gleichzeitig entfernen, das eine dem oberen teil des Grills entgegen und das andere dem unteren Teil des Grills entgegen, so daß die ganze Seitenöffnung befreit (3) wird.
Um die Seitenöffnung zuzudecken, drücken Sie auf den Griff (27) in die entgegengesetzte Richtung, so daß sich die Glasscheiben gleichzeitig bewegen und annähern und die entsprechende Seitenöffnung zudecken.

5. Gemäß der Ansprüche 1, 2, 3 und 4 ist der einliegende Grill **dadurch gekennzeichnet, dass** die Grills des einliegenden Typs nach dem Vorgehen funktionieren, welches in Ansprüchen 1-2-3 und 4 beschrieben wird.

6. Gemäß Anspruch 1 ist der einliegende Grill **dadurch gekennzeichnet, daß** die Form der Brenndüse (12) parallel und genauso lang wie das Ablagetablett (11) des Grills ist; sie formt eine Höhlung, in der der Gasbrenner (13) und das obere Sieb (14) eingesetzt werden und im Unterteil der Höhlung findet man Löcher (22) zur Luftzuführung (23). Auf beiden Seiten ist eine Umklammerung zu finden, welche zu den Stützen (15) passend eingestellt ist.

7. Gemäß der Ansprüche 1 bis 6 ist der einliegende Grill **dadurch gekennzeichnet, daß** die Flamme (24) der Brenndüse (13) Hitze nach oben (25) ausstrahlt, wo das Fleisch im Grill rotiert; das erfolgt durch die Höhlung der Brenndüse (12). Gleichzeitig wird die Hitze im unteren Teil des Ablagetabletts (11) verringert, wo sich die Fettsammler (20) befinden.

8. Gemäß der Ansprüche 1 bis 6 und 7 ist der einliegende Grill **dadurch gekennzeichnet, daß** die Brenndüse (12) an den Stützen (15) leicht eingesetzt oder entfernt wird. Dadurch wird der Gasbrenner (13) erfolgreich benutzt, entweder wenn die Brenndüse (12) entfernt oder Brennkohle gebraucht wird (21).

## Revendications

1. La rôtisserie fermée se compose d'un cadre en métal (5), d'une loge métallique (1), des vitres thermo -résistantes (2), des câbles (8), des rouleaux (6), des guides (7), d'un brûleur de gaz (13) ou des résistances électriques (13), d'un agent brûleur (12), d'un mécanisme de rotation (9), des broches (4), des appareils automatiques électriques et de gaz (14). La rôtisserie se **caractérise par le fait que** pour fermer chaque ouverture latérale (3) il existe un système à vitres (2) en deux pièces à dimensions et poids identiques qui contrebalancent l'un l'autre à travers deux câbles (8), se déplacent parallèlement sur des guides (7), s'approchent et couvrent la surface entière de l'ouverture latérale (3), soit ils s'écartent en libérant toute la surface latérale (3). Elle se caractérise aussi par un agent brûleur (12), en forme creuse et multi-angulaire, à des orifices d'entrée d'air (22) en partie inférieure, facile à poser ou à retirer du plateau de la rôtisserie (11).

2. La rôtisserie fermée, d'après la revendication 1 se **caractérise par le fait qu'**elle comporte deux vitres (2) vitres servant à couvrir chaque ouverture latérale, de dimensions et poids identiques, qui contrebalancent l'un l'autre sur deux câbles latérales (8) passant par une poulie correspondante (10), fixée sur un cadre sur la partie supérieure de la rôtisserie.

3. La rôtisserie fermée, d'après les revendications 1 et 2 se **caractérise par le fait que** les deux vitres (2) servant à couvrir chaque ouverture latérale (3) coulissent en rouleaux (6) sur deux guides (7) fixés sur les extrémités du cadre (5) de la partie inférieure jusqu'à la partie supérieure de la rôtisserie.

4. La rôtisserie fermée, d'après les revendications 1, 2 et 3 se **caractérise par le fait que** pour fermer les vitres (2) couvrant chaque côté latérale de la rôtisserie, il faudra pousser la poignée (27) d'un des vitres (2) vers le haut ou vers le bas et les vitres (2) s'écartent simultanément, un vers la partie supérieure de la rôtisserie et l'autre vers la partie inférieure, en libérant entièrement l'ouverture latérale.

5. La rôtisserie fermée, d'après les revendications 1, 2, 3 et 4 se **caractérise par le fait que** les rôtisseries de type fermé fonctionnent suivant la méthode décrite dans les revendications 1-2-3 et 4

6. La rôtisserie fermée, d'après la revendication 1 se **caractérise par** la forme de l'agent brûleur (12) qui est parallèle, son longueur est identique à celui du plateau (11) de la rôtisserie et forme un partie creuse dans laquelle sont placés le brûleur (13) et le crible supérieur (14). Sur la partie inférieure du creux se trouvent les orifices (22) d'entrée d'air (23). Sur les deux extrémités il y a un embrayage ajusté aux supports (15).

7. La rôtisserie fermée, d'après les revendications 1 à 6 se **caractérise par le fait que** la flamme (24) du brûleur de gaz (13) émet de la chaleur en direction ascendante (25) où la viande tourne à l'intérieur de la rôtisserie.
Ceci est atteint via le creux de l'agent brûleur (12), en réduisant en même temps la chaleur sur la partie inférieur du plateau (11) où se trouvent les récepteurs de graisse (20)

8. La rôtisserie fermée, d'après les revendications 1-6 et 7 se **caractérise par le fait que** l'agent brûleur (12) se pose et se rétracte facilement par les supports (15). Ainsi il est possible d'utiliser le brûleur de gaz (13) soit quand l'agent brûleur (12) est rétracté soit en utilisant du charbon.
